# EUROPEAN PATENT APPLICATION

(11) **EP 4 163 752 A1**
(43) Date of publication of application: **12.04.2023**
(21) Application number: 21817887.9
(22) Date of filing: 03.06.2021
(51) Int. Cl.: G05D 1/02, G05D 1/08, G05D 3/12

(54) **SERVO CONTROL METHOD, PROCESSOR, STORAGE MEDIUM AND MOVABLE PLATFORM**

(30) Priority: 03.06.2020 CN 202010492674
(71) Applicant: Hangzhou Iplusmobot Technology Co., Ltd., Hangzhou, Zhejiang 310053 (CN)
(72) Inventor: SUN, Yichao, Hangzhou, Zhejiang 310053 (CN); DAI, Shuwei, Hangzhou, Zhejiang 310053 (CN); WU, Haoxian, Hangzhou, Zhejiang 310053 (CN); LIU, Feng, Hangzhou, Zhejiang 310053 (CN)
(74) Representative: De Clercq & Partners
(86) International application number: PCT/CN2021/098060
(87) International publication number: WO 2021/244598

(57) **Abstract**

A servo control method, a processor, a storage medium and a movable platform. The servo control method includes that: a preset target pose is determined; at least one identifier is acquired, and the current pose is obtained; an offset angle is determined according to a relative pose relationship between the preset target pose and the current pose; a target straight line is determined based on the identifier and the preset target pose, and an offset displacement is determined according to a relative pose relationship between the target straight line and the current pose; and a control instruction is determined according to the offset displacement and the offset angle. The processor of the servo control is configured to invoke a program code, and the storage medium stores thereon an executable computer instruction for implementing the servo control method. The movable platform includes a collector (4) for acquiring an identifier, and a processor or a storage medium. The servo control method only calculates an adjustment angle and a displacement component, and the adjustment method is simple and has a small calculation amount, achieving the similar effects of being quick and accurate to point of an omnidirectional chassis capable of quickly adjusting a pose with three degrees of freedom under a holonomic constraint.

## Description

### Cross-Reference to Related Application

The present invention claims priority to Chinese Patent Application No. 202010492674.3, filed on June 3, 2020 and entitled "Servo Control Method, Processor, Storage Medium and Movable Platform", the disclosure of which is hereby incorporated by reference in its entirety.

### Technical Field

The present invention belongs to the technical field of control, and in particular to a servo control method, a processor, a storage medium and a movable platform.

### Background

Modern logistics systems, warehousing systems or industrial production lines require higher and higher accuracy. A factory is developing towards an intelligent and unmanned factory, and every component is expensive, which requires that every production device in the factory needs extremely high operation precision, so that the whole system of the factory can operate in a highly robust closed loop. As transportation equipment between production lines, the movable platform needs to meet the requirements of transportation index only if the docking accuracy reaches millimeter level or above.

Among existing movable platforms, the movable platform based on a chassis such as a differential chassis or double steering wheel chassis, which is difficult to quickly adjust a pose with three degrees of freedom, is widely used, but compared with an omnidirectional wheel chassis which may quickly adjust the pose with three degrees of freedom, the above-mentioned chassis has some limitations. For example, for the differential chassis, the lateral error cannot converge quickly in a narrow space due to nonholonomic constraint limitations. For the double steering wheel chassis, due to the limitation of the design itself, a rudder angle is caused to change frequently due to high-frequency omnidirectional adjustment during millimeter-scale high-precision lateral docking, which cannot accurately meet the kinematics theoretical model and reduces the service life thereof at the same time. For some application scenarios, an existing adjustment method often accurately adjust to the point through holonomic constraints, and the calculation process is too complicated and inefficient. However, in fact, some dimensional errors may be ignored and the same purpose can be achieved, so as to simplify the calculation and execution process and improve the execution efficiency.

To solve the above problems, no effective solution has been put forward yet.

### Summary

Aiming at the problems existing in existing products, the present invention provides a high-precision and high-efficiency servo control method performed using a holonomic constraint, a processor, a storage medium and a movable platform.

The invention provides a servo control method, which may include the following operations.

A preset target pose is determined.

At least one identifier is acquired, and the current pose is obtained.

An offset angle is determined according to a relative pose relationship between the preset target pose and the current pose.

A target straight line is determined based on the identifier and the preset target pose, and an offset displacement is determined according to a relative pose relationship between the target straight line and the current pose.

A control instruction is acquired according to the offset displacement and the offset angle.

In some embodiments of the present invention, at least the same identifier is acquired at a preset regular interval, and the current pose of the current moment is obtained according to the identifier in each preset regular interval to acquire a control instruction; and servo control is performed on the current pose using the control instruction acquired in each preset regular interval.

In some embodiments of the present invention, the operation of acquiring at least one identifier and obtaining the current pose includes that: an identifier coordinate system O_{w}-xyz is established based on the identifier to obtain displacement and angle coordinates of the current pose in the identifier coordinate system O_{w}-xyz.

In some embodiments of the present invention, the identifier is an identifier arranged perpendicular to the ground.

In some embodiments of the present invention, the operation of determining an offset angle according to a relative pose relationship between the preset target pose and the current pose includes that: the relative pose relationship between the preset target pose and the current pose is obtained according to the attitude of the preset target pose in the identifier coordinate system O_{w}-xyz and the attitude of the current pose in the identifier coordinate system O_{w}-xyz, and the offset angle is extracted.

In some embodiments of the present invention, the operation of determiing a target straight line based on the identifier and the preset target pose, and determining an offset displacement according to a relative pose relationship between the target straight line and the current pose includes that: a virtual target point O' is created based on a displacement coordinates of the preset target pose, and a preset target point coordinate system O_{o-xyz} is established according to the preset target pose; a virtual target pose is created according to the virtual target point; and a relative pose relationship between the current pose and the virtual target pose is obtained according to the coordinates of the displacement and angle of the virtual target pose in the preset target point coordinate system O_{o-xyz} and a coordinates of the displacement and angle of the current pose in the preset target point coordinate system O_{o-xyz}, the target straight line is obtained based on the identifier and the preset target pose, and the offset displacement of the current pose and the virtual target pose in a direction perpendicular to the target straight line is extracted.

In some embodiments of the present invention, the operation of being according to the coordinates of the displacement and angle of the virtual target pose in the preset target point coordinate system O_{o-xyz} includes that: a virtual target point coordinate system O_{o'-xyz} is established based on the virtual target pose, and a relative pose relationship between the virtual target pose and the preset target pose is calculated according to a displacement of coordinate axis origins and the angle deviation of the coordinate axes between the virtual target point coordinate system O_{o'-xyz} and the preset target point coordinate system O_{o-xyz}.

In some embodiments of the present invention, the operation of establishing the virtual target point coordinate system O_{o'-xyz} based on the virtual target pose includes that: according to a vector relationship *̅w̅o̅*̅ between the identifier and the origin of the preset target point coordinate system O_{o-xyz} under the identifier coordinate system O_{w-xyz}, a vector relationship between the identifier and a point P obtained from a unit vector of the preset target point in the Z-axis direction of the identifier coordinate system under the identifier coordinate system O_{w-xyz}, and a conversion relationship between the preset target point coordinate system O_{o-xyz} and the identifier coordinate system O_{w-xyz}, a unit vector *̅o̅p̅*̅ of a virtual target pose in the target straight line direction under the preset target point coordinate system O_{o-xyz} is obtained, and recorded as a coordinate axis Y axis of the virtual target point coordinate system; according to the direction perpendicular to the ground, the unit vector is taken and recorded as a coordinate axis Z axis of the virtual target point coordinate system; and based on the principle of space rectangular coordinate system, a coordinate axis X axis of the virtual target point coordinate system perpendicular to the target straight line is obtained.

The invention provides a processor of servo control, which is configured to invoke a program code. When the program code is executed, the processor executes the following operations that: a preset target pose is determined; at least one identifier is acquired, and the current pose is obtained; an offset angle is determined according to a relative pose relationship between the preset target pose and the current pose; a target straight line is obtained based on the identifier and the preset target pose, and an offset displacement is determined according to a relative pose relationship between the target straight line and the current pose; and servo control is performed according to the offset displacement and the offset angle.

In some embodiments of the present invention, the processor is further configured to establish an identifier coordinate system O_{w-xyz} based on the identifier to obtain displacement and angle coordinates of the current pose in the identifier coordinate system O_{w-xyz}.

In some embodiments of the present invention, the processor acquires at least the same identifier at a preset regular interval, obtains the current pose of the current moment according to the identifier in each preset regular interval to acquire a control instruction; and servo control is performed on the current pose using the control instruction acquired in each preset regular interval.

In some embodiments of the present invention, the processor is further configured to obtain the relative pose relationship between the preset target pose and the current pose according to the attitude of the preset target pose in the identifier coordinate system O_{w-xyz} and the attitude of the current pose in the identifier coordinate system O_{w-xyz}, and extract the offset angle.

In some embodiments of the present invention, the processor is further configured to create a virtual target point O' based on a displacement coordinates of the preset target pose, and establish a preset target point coordinate system O_{o-xyz} according to the preset target pose; create a virtual target pose according to the virtual target point; and according to the coordinates of the displacement and angle of the virtual target pose in the preset target point coordinate system O_{o-xyz} and the coordinates of the displacement and angle of the current pose in the preset target point coordinate system O_{o-xyz}, obtain the relative pose relationship between the current pose and the virtual target pose, obtain the target straight line based on the identifier and the preset target pose, and extract the offset displacement of the current pose and the virtual target pose in a direction perpendicular to the target straight line.

In some embodiments of the present invention, the processor is further configured to establish a virtual target point coordinate system O_{o'-xyz} based on the virtual target pose, and calculate the relative pose relationship between the virtual target pose and the preset target pose according to a displacement of coordinate axis origins and an angle deviation of the coordinate axes between the virtual target point coordinate system O_{o'-xyz} and the preset target point coordinate system O_{o-xyz}.

In some embodiments of the present invention, the processor is further configured to obtain a unit vector *̅o̅p̅*̅ of a virtual target pose in the target straight line direction under the preset target point coordinate system O_{o-xyz} according to a vector relationship *̅w̅o̅*̅ between the identifier and the origin of the preset target point coordinate system O_{o-xyz} under the identifier coordinate system O_{w-xyz}, a vector relationship between the identifier and a point P obtained from a unit vector of the preset target point in the Z-axis direction of the identifier coordinate system under the identifier coordinate system O_{w-xyz}, and a conversion relationship between the preset target point coordinate system O_{o-xyz} and the identifier coordinate system O_{w-xyz}, and record same as a coordinate axis Y axis of the virtual target point coordinate system; take a unit vector according to the direction perpendicular to the ground and record same as a coordinate axis Z axis of the virtual target point coordinate system; and obtain a coordinate axis X axis of the virtual target point coordinate system perpendicular to the target straight line, based on the principle of space rectangular coordinate system.

The invention provides a storage medium, and the storage medium stores a computer instruction thereon. When executed, the computer instruction implements a servo control method in any of the above.

The invention provides a movable platform, which includes a collector configured to acquire an identifier, and also includes the processor in any of the above, or the above storage medium.

After adopting the above technology, compared with a conventional art, the present invention has the following advantages:
The invention is used to perform servo control under a nonholonomic constraint by only calculating and determining the offset angle and offset displacement, so that a control object can be adjusted to the target straight line. Since the adjustment is to the target straight line but not accurate to the point, only the adjustment angle and a displacement component are calculated in the calculation process of the invention, the adjustment method is simple and the calculation amount is small. Meanwhile, the target straight line and angle constraint ensures high accuracy. The invention overcomes the deficiency of a non-omnidirectional movable chassis in the adjustment process. According to the invention, the error in a certain dimension is ignored, and other degrees of freedom are used for compensation, thus achieving the similar effects of being quick and accurate to point of an omnidirectional chassis capable of quickly adjusting a pose with three degrees of freedom under a holonomic constraint.

### Brief Description of the Drawings

The drawings described herein for further understanding of the present invention consist a part of the invention. The schematic embodiments and description thereof are used for explaining the invention and do not limit the invention improperly. In the drawings,
Fig. 1 is a flow block diagram of the present invention.
Fig. 2 is a schematic diagram of a servo control method of the present invention.
Fig. 3 is a schematic diagram of a method of the present invention.
Fig. 4 is a structural diagram of a movable platform of the present invention.

Description of drawing identifiers: 1. Body; 2. Movable chassis; 3. Docking apparatus; and 4. Collector.

### Detailed Description of the Embodiments

The invention is further elaborated below with reference to the drawings and specific embodiments. The invention may be applied to a scenario where high-precision docking is performed on a movable platform and may also be applied to a high-precision positioning scenario under other nonholonomic constraints.

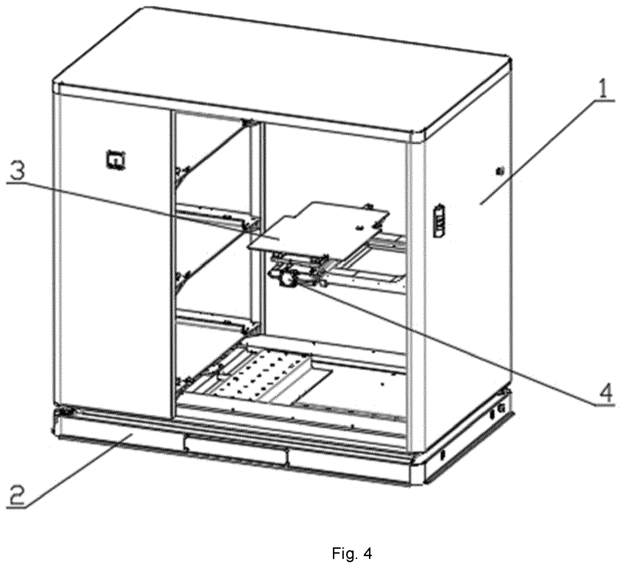

Fig. 4 is a structural diagram of a movable platform of the present invention. In an embodiment of the scenario where high-precision docking is performed on the movable platform, a movable platform as shown in Fig. 4 may be applied to, a collector configured to acquire an identifier W is included, and the above processor or the above storage medium is further included. The movable platform includes a docking apparatus and a movable chassis installed on a body. The above movable chassis includes, but is not limited to, a non-omnidirectional movable chassis. In the movable platform as shown in Fig. 4, a double steering wheel chassis which is prone to high-frequency joggle is adopted, but same cannot flexibly move in any direction, and control over same is more difficult. Through the method described in the invention, the control difficulty and error may be minimized.

More specifically, the docking apparatus is a telescopic fork arm, and the extension length of the docking apparatus may be adjusted according to the site requirements. The telescopic fork arm is provided with a sensor for identifying the extension length of the fork arm. As the extension length may be adjusted, it is only necessary to adjust the docking apparatus of the movable platform to a point on the target straight line and stretch the docking apparatus by a target angle so as to implement high-precision docking. The calculation method is simple. In the movable platform as shown in Fig. 4, in order to implement accurate docking thereof, the docking precision of the docking apparatus may be controlled within ±2 mm by the way described in the invention, thus ensuring high-precision docking.

The collector is installed on the docking apparatus, so that a mechanical error between the docking apparatus and the vehicle body may be avoided.

In the concrete implementation process, the movable platform is navigated near a target pose and located in the field of vision of the collector. According to the identifier W, the movable platform is servo-controlled so as to adjust to the target pose with high precision.

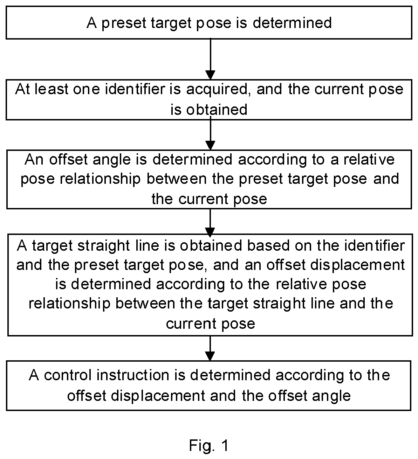

Fig. 1 is a flow block diagram of the invention. As shown in Fig. 1, the invention provides a servo control method, and the method includes the following steps:
At S101, a preset target pose is determined.

In the invention, the preset target pose may be implemented by first controlling the movable platform to move to the target pose to read the identifier W through teaching. The preset target pose is not necessarily the target pose actually reached by the movable platform, but only used to calculate the offset angle and offset displacement.

At S102, at least one identifier W is acquired, and the current pose is obtained.

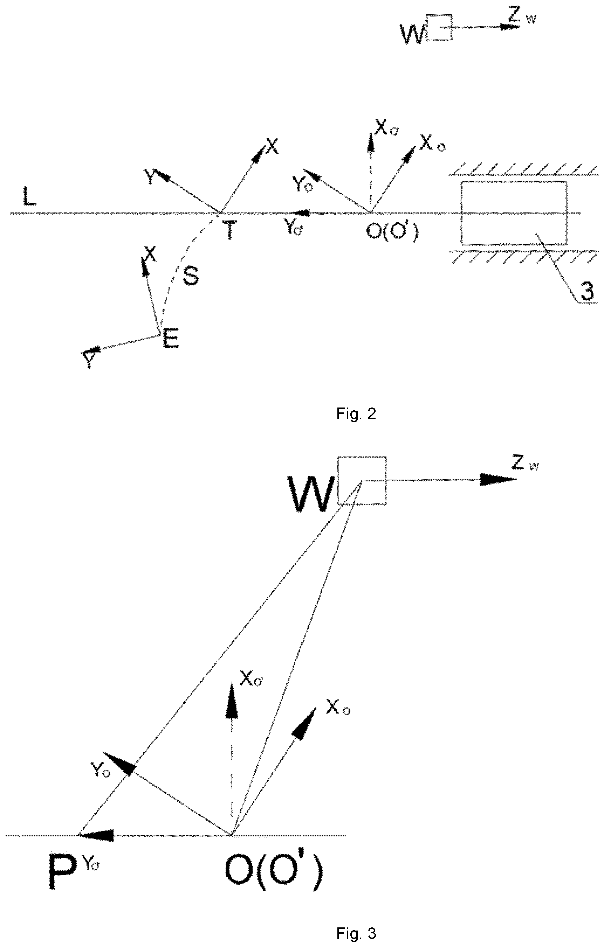

Herein, the identifier W collected from the collector is included, and the identifier W may be a two-dimensional code or other patterns or features that may be used for positioning. Furthermore, the collector is not limited to the angle, type and model, and frequency of collection. The collector performs collection many times so as to ensure immediacy and accuracy. The collection mode of the collector includes, but is not limited to that: the above-mentioned identifier W is collected once at a fixed moving distance, and the current pose is calculated. Fig. 2 is a schematic diagram of a servo control method of the present invention. As shown in Fig. 2, the current pose is indicated by point E in Fig. 2. The identifier coordinate system may be established based on the above identifier W, and then the current pose is calculated by establishing a three-dimensional coordinate system and performing conversion. The above pose includes position and attitude.

At S103, an offset angle Δ θ is determined according to a relative pose relationship between the preset target pose and the current pose.

When the preset target pose and the current pose are converted into the same three-dimensional coordinate system, the space angle difference, that is, the relative pose relationship, may be determined, and the offset angle Δ θ is determined. The above-mentioned offset angle is the angle that the movable platform needs to rotate to move to the target pose.

At S104, a target straight line is determined based on the identifier W and the preset target pose, and an offset displacement ΔX is determined according to the relative pose relationship between the target straight line and the current pose.

As shown in Fig. 2, the above-mentioned target straight line is indicated by L in Fig. 2, and the above-mentioned target straight line is a linear constraint of the position where the movable platform finally moves. The target pose of the movable platform is located at any possible position on the target straight line, and the preset target pose is a specific point location on the target straight line. The above-mentioned target straight line and the above-mentioned current pose may be obtained by reading the same identifier W, with smaller error and higher precision.

At S105, a control instruction is acquired according to the offset displacement ΔX and the offset angle Δ θ.

In order to further improve the precision, the above execution steps may be split into multiple executions. More specifically, at least the same identifier is acquired at a preset regular interval, and the current pose of the current moment is obtained according to the identifier W in each preset regular interval to acquire a control instruction; and servo control is performed on the current pose by using the control instruction acquired in each preset regular interval. The preset regular interval may be a fixed time interval, and may also be a fixed distance interval, or other forms. The shorter the preset regular interval period is, the higher the frequency is, and the higher the precision of controlling to reach the target pose by the control instruction is.

As shown in Fig. 2, the path S is an actual path that the servo control may take place, and the target pose T is an actual pose that the servo control may reach. The implementation process can adjust the angle and displacement at the same time by only identifying at least one identifier W, without independent repeated debugging.

In S102, the operation of acquiring at least one identifier W to obtain the current pose includes that: an identifier coordinate system O w-xyz is established based on the identifier W to obtain displacement and attitude of the current pose in the identifier coordinate system O w-xyz. The method in the invention with the publication patent number CN110209169A entitled control method and control apparatus of movable platform and movable platform may be employed for calculation and acquisition. The relative pose relationship between the identifier and a device to be docked by the docking apparatus is fixed. In the embodiment, only one identifier is used as an example, and similarly, other expansion methods of a plurality of identifiers may be demonstrated.

In the embodiment, the identifier W is an identifier W set perpendicular to the ground, so that the Z axis Z w (perpendicular to the plane where the identifier W lies) of the identifier coordinate system established based on the identifier W is parallel to the ground. The Z axis Z w of the identifier coordinate system is used to calculate the target straight line. In the embodiment, the identifier coordinate system and the target straight line are parallel to each other. The calculation difficulty is further simplified, and the calculation efficiency is improved.

In S103, the operation of determining an offset angle according to a relative pose relationship between the preset target pose and the current pose includes that: the relative pose relationship between the preset target pose and the current pose is obtained according to the attitude of the preset target pose in the identifier coordinate system O w-xyz and the attitude of the current pose in the identifier coordinate system O w-xyz, and the offset angle is extracted.

More specifically, the following method may be employed:
OME, that is, the pose of the current pose in the preset target point coordinate system O_{o-xyz} is obtained by the pose of the current pose under the identifier coordinate system O_{w-xyz}, recorded as WME and the pose of the preset target pose under the identifier coordinate system O_{w-xyz}, recorded as WMO and an attitude parameter is extracted, that is, the offset angle Δ θ.

In S104, as shown in Fig. 3, the operation of determining an offset displacement according to the relative pose relationship between the target straight line and the current pose includes that: a virtual target point O' is created based on the displacement coordinates of the preset target pose, and a preset target point coordinate system O_{o-xyz} is established according to the preset target pose; a virtual target pose is created according to the virtual target point; and according to the coordinates of the displacement and angle of the virtual target pose in the preset target point coordinate system O_{o-xyz} and the coordinates of the displacement and angle of the current pose in the preset target point coordinate system O_{o-xyz}, the relative pose relationship between the current pose and the virtual target pose is obtained, the target straight line is obtained based on the identifier W and the preset target pose, and the offset displacement of the current pose and the virtual target pose in the direction perpendicular to the target straight line is extracted.

More specifically, the following method may be employed:
O' ME, that is, the pose of the current pose in the virtual target point coordinate system O o-xyz is obtained by the pose of the current pose in the preset target point coordinate system O o-xyz, recorded as OₒME and the pose of the virtual target pose under the preset target point coordinate system O o-xyz, recorded as OₒME', and a displacement parameter perpendicular to the target straight line is extracted, that is, the offset displacement ΔX.

The above virtual target point and virtual target pose are intermediate parameters introduced in the calculation process to facilitate the calculation. For the convenience of calculation, in the embodiment, the virtual target point coincides with the origin of the preset target point coordinate system O_{o-xyz}, and rotation matrix conversion is required between the virtual target pose and the preset target pose. It is to be understood that the virtual target pose is a point location of the target pose on the target straight line determined based on the Z axis Z_{w} of the two-dimensional code coordinate system, while the preset target pose is a point location of the target pose obtained based on an actual teaching result. It is to be understood that the above virtual target pose extracts the displacement parameter from the preset target pose, the attitude parameter is ignored and the calculation process is simplified. Herein, the virtual target point and the offset displacement are the shortest straight line distance between the movable platform and the target straight line.

The operation of being according to the coordinates of the displacement and angle of the virtual target pose in the preset target point coordinate system O_{o-xyz} includes, but is not limited to that: a virtual target point coordinate system O_{o' -xyz} is established based on the virtual target pose, and the relative pose relationship between the virtual target pose and the preset target pose is calculated according to the displacement of coordinate axis origins between the virtual target point coordinate system O_{o' -xyz} and the preset target point coordinate system O_{o-xyz} and the angle deviation of the coordinate axes.

Herein, the operation of establishing the virtual target point coordinate system O_{o' -xyz} based on the virtual target pose includes that: according to a vector relationship *̅w̅o̅*̅ between the identifier W and the origin of the preset target point coordinate system O_{o-xyz}, and a vector relationship *̅w̅p̅*̅ between the identifier W and a point P obtained from a unit vector of the preset target point in the Z-axis Z_{w} direction of the identifier coordinate system Z under the identifier coordinate system O_{w-xyz}, and a conversion relationship between the preset target point coordinate system O_{o-xyz} and the identifier coordinate system O_{w-xyz}, a unit vector *̅o̅p̅*̅ of a virtual target pose in the target straight line direction under the preset target point coordinate system O_{o-xyz} is obtained, and recorded as the coordinate axis Y axis of the virtual target point coordinate system; according to the direction perpendicular to the ground, the unit vector is taken and recorded as the coordinate axis Z Z_{w} of the virtual target point coordinate system; and based on the principle of space rectangular coordinate system, the coordinate axis X axis of the virtual target point coordinate system perpendicular to the target straight line is obtained.

More specifically, the following method may be employed.

The unit vector of the virtual target pose in the target straight line direction under the preset target point coordinate system O_{o-xyz} is obtained by a vector relationship between the identifier W and the origin of the preset target point coordinate system O_{o-xyz} under the identifier coordinate system O_{w-xyz}, recorded as *̅w̅o̅*̅ a vector relationship between the identifier W and a point P under the identifier coordinate system O_{w-xyz}, recorded as *̅w̅p̅*̅ and a conversion relationship between the preset target point coordinate system O_{o-xyz} and the identifier coordinate system O_{w-xyz}, recorded as WMO, and recorded as *̅o̅p̅*̅. Herein, the above point P is a point obtained from the unit vector of the preset target point in the Z axis Z_{w} direction of the identifier coordinate system.

As shown in Fig. 3, the Z axis Z_{w} direction of the above-mentioned identifier coordinate system is parallel to the target straight line direction.

A processor of servo control under a nonholonomic constraint is configured to invoke a program code. When the program code is executed, the processor is configured to execute the following operations that: a preset target pose is determined; at least one identifier W is acquired, and the current pose is obtained; an offset angle is determined according to a relative pose relationship between the preset target pose and the current pose; a target straight line is obtained based on the identifier W and the preset target pose, and an offset displacement is determined according to the relative pose relationship between the target straight line and the current pose; and servo control is performed according to the offset displacement and the offset angle.

As an implementation mode, the processor is further configured to establish an identifier coordinate system O_{w-xyz} based on the identifier to obtain displacement and angle coordinates of the current pose in the identifier coordinate system O_{w-xyz}.

As an implementation mode, the processor acquires at least the same identifier at a preset regular interval, and obtains the current pose of the current moment according to the identifier in each preset regular interval to acquire a control instruction; and servo control is performed on the current pose by using the control instruction acquired in each preset regular interval.

As an implementation mode, the processor is further configured to obtain the relative pose relationship between the preset target pose and the current pose according to the attitude of the preset target pose in the identifier coordinate system O_{w-xyz} and the attitude of the current pose in the identifier coordinate system O_{w-xyz}, and extract the offset angle.

As an implementation mode, the processor is further configured to create a virtual target point O' based on the displacement coordinates of the preset target pose, and establish a preset target point coordinate system O_{o-xyz} according to the preset target pose; create a virtual target pose according to the virtual target point; and according to the coordinates of the displacement and angle of the virtual target pose in the preset target point coordinate system O_{o-xyz} and the coordinates of the displacement and angle of the current pose in the preset target point coordinate system O_{o-xyz}, obtain the relative pose relationship between the current pose and the virtual target pose, obtain the target straight line based on the identifier and the preset target pose, and extract the offset displacement of the current pose and the virtual target pose in the direction perpendicular to the target straight line.

As an implementation mode, the processor is further configured to establish a virtual target point coordinate system O_{o' -xyz} based on the virtual target pose, and calculate the relative pose relationship between the virtual target pose and the preset target pose according to the displacement of coordinate axis origins between the virtual target point coordinate system O_{o' -xyz} and the preset target point coordinate system O_{o-xyz} and the angle deviation of the coordinate axes.

As an implementation mode, the processor is further configured to obtain a unit vector *̅o̅p̅*̅ of a virtual target pose in the target straight line direction under the preset target point coordinate system O_{o-xyz} according to a vector relationship *̅w̅o̅*̅ between the identifier and the origin of the preset target point coordinate system O_{o-xyz} under the identifier coordinate system O_{w-xyz}, and a vector relationship between the identifier and a point P obtained from a unit vector of the preset target point in the Z-axis direction of the identifier coordinate system under the identifier coordinate system O_{w-xyz}, and a conversion relationship between the preset target point coordinate system O_{o-xyz} and the identifier coordinate system O_{w-xyz}, and record same as the coordinate axis Y axis of the virtual target point coordinate system; take the unit vector according to the direction perpendicular to the ground and record same as the coordinate axis Z axis of the virtual target point coordinate system; and obtain, based on the principle of space rectangular coordinate system, the coordinate axis X axis of the virtual target point coordinate system perpendicular to the target straight line.

A storage medium, the storage medium stores a computer instruction thereon. When executed, the computer instruction implements a servo control method in any of the above.

A movable platform, includes a collector configured to acquire an identifier, and also includes the processor in any of the above, or the above storage medium.

In the description of the specification, the description of terms "one implementation mode", "some embodiments", "example", "specific example" or "some examples" means that the specific features, structures, materials or characteristics described in combination with the embodiment or example are included in at least one implementation mode or example of the invention. In this specification, the schematic expressions of the above terms do not necessarily refer to the same embodiments or examples. Furthermore, the described specific features, structures, materials or characteristics may be combined in any suitable manner in one or more embodiments or examples.

Although the embodiments of the present invention have been shown and described above, they should not be considered as limitations to the claims. This invention is not limited to the above embodiments, but its specific structure is allowed to vary, and all the variations made within the scope of protection of the independent claims of this invention are within the scope of protection of this invention.

## Claims

1. A servo control method, comprising:
determining a preset target pose;
acquiring at least one identifier, and obtaining the current pose;
determining an offset angle according to a relative pose relationship between the preset target pose and the current pose;
determining a target straight line based on the identifier and the preset target pose, and determining an offset displacement according to a relative pose relationship between the target straight line and the current pose; and
determining a control instruction according to the offset displacement and the offset angle.

2. The servo control method of claim 1, wherein at least the same identifier is acquired at a preset regular interval, the current pose of the current moment being obtained according to the identifier in each preset regular interval to acquire a control instruction, and servo control being performed on the current pose using the control instruction acquired in each preset regular interval.

3. The servo control method of claim 1, wherein acquiring at least one identifier and obtaining the current pose comprises:
establishing an identifier coordinate system O_{w-xyz} based on the identifier to obtain displacement and angle coordinates of the current pose in the identifier coordinate system O_{w-xyz}.

4. The servo control method of claim 1, wherein the identifier is an identifier arranged perpendicular to the ground.

5. The servo control method of claim 3, wherein determining an offset angle according to a relative pose relationship between the preset target pose and the current pose comprises:
obtaining the relative pose relationship between the preset target pose and the current pose according to the attitude of the preset target pose in the identifier coordinate system O_{w-xyz} and the attitude of the current pose in the identifier coordinate system O_{w-xyz}, and determining the offset angle.

6. The servo control method of claim 3, wherein determining a target straight line based on the identifier and the preset target pose, and determining an offset displacement according to a relative pose relationship between the target straight line and the current pose comprises:
creating a virtual target point O' based on a displacement coordinates of the preset target pose, and establishing a preset target point coordinate system O_{o-xyz} according to the preset target pose;
creating a virtual target pose according to the virtual target point; and
obtaining the relative pose relationship between the current pose and the virtual target pose according to a coordinates of the displacement and angle of the virtual target pose in the preset target point coordinate system O_{o-xyz} and a coordinates of the displacement and angle of the current pose in the preset target point coordinate system O_{o-xyz}, determining the target straight line based on the identifier and the preset target pose, and determining the deviation displacement of the current pose and the virtual target pose in a direction perpendicular to the target straight line.

7. The servo control method of claim 6, wherein being according to the coordinates of the displacement and angle of the virtual target pose in the preset target point coordinate system O_{o-xyz} comprises:
establishing a virtual target point coordinate system O_{o' -xyz} based on the virtual target pose, and determining a relative pose relationship between the virtual target pose and the preset target pose according to a displacement of coordinate axis origins and an angle deviation of the coordinate axes between the virtual target point coordinate system O_{o' -xyz} and the preset target point coordinate system O_{o-xyz}.

8. The servo control method of claim 7, wherein establishing a virtual target point coordinate system O_{o' -xyz} based on the virtual target pose comprises:
obtaining a unit vector *̅o̅p̅*̅ of the virtual target pose in the target straight line direction under the preset target point coordinate system O_{o-xyz} according to a vector relationship *̅w̅o̅*̅ between the identifier and the origin of the preset target point coordinate system O_{o-xyz} under the identifier coordinate system O_{w-xyz}, a vector relationship between the identifier and a point P under the identifier coordinate system O_{w-xyz}, and a conversion relationship between the preset target point coordinate system O_{o-xyz} and the identifier coordinate system O_{w-xyz}, and recording same as a coordinate axis Y axis of the virtual target point coordinate system, wherein the point P is obtained from a unit vector of the preset target point in the Z-axis direction of the identifier coordinate system;
taking a unit vector according to the direction perpendicular to the ground and recording same as a coordinate axis Z axis of the virtual target point coordinate system; and
obtaining a coordinate axis X axis of the virtual target point coordinate system perpendicular to the target straight line, based on a principle of space rectangular coordinate system.

9. A processor of servo control, configured to invoke a program code, when the program code is executed, the processor executing the following operations:
determining a preset target pose; acquiring at least one identifier, and obtaining the current pose;
determining an offset angle according to a relative pose relationship between the preset target pose and the current pose; determining a target straight line based on the identifier and the preset target pose, and determining an offset displacement according to a relative pose relationship between the target straight line and the current pose; and performing servo control according to the offset displacement and the offset angle.

10. The processor of claim 9, wherein the processor is further configured to establish an identifier coordinate system O_{w-xyz} based on the identifier to obtain displacement and angle coordinates of the current pose in the identifier coordinate system O_{w-xyz}.

11. The processor of claim 10, wherein the processor acquires at least the same identifier at a preset regular interval and obtains the current pose of the current moment according to the identifier in each preset regular interval to acquire a control instruction, servo control being performed on the current pose using the control instruction acquired in each preset regular interval.

12. The processor of claim 10, wherein the processor is further configured to obtain the relative pose relationship between the preset target pose and the current pose according to the attitude of the preset target pose in the identifier coordinate system O_{w-xyz} and the attitude of the current pose in the identifier coordinate system O_{w-xyz}, and determine the offset angle.

13. The processor of claim 10, wherein the processor is further configured to create a virtual target point O' based on a displacement coordinates of the preset target pose, and establish a preset target point coordinate system O_{o-xyz} according to the preset target pose; create a virtual target pose according to the virtual target point; and according to the coordinates of the displacement and angle of the virtual target pose in the preset target point coordinate system O_{o-xyz} and the coordinates of the displacement and angle of the current pose in the preset target point coordinate system O_{o-xyz}, obtain the relative pose relationship between the current pose and the virtual target pose, determine the target straight line based on the identifier and the preset target pose, and determine the deviation displacement of the current pose and the virtual target pose in a direction perpendicular to the target straight line.

14. The processor of claim 13, wherein the processor is further configured to establish a virtual target point coordinate system O_{o' -xyz} based on the virtual target pose, and determine a relative pose relationship between the virtual target pose and the preset target pose according to the displacement of coordinate axis origins and an angle deviation of the coordinate axes between the virtual target point coordinate system O_{o' -xyz} and the preset target point coordinate system O_{o-xyz}.

15. The processor of claim 14, wherein the processor is further configured to obtain a unit vector *̅o̅p̅*̅ of the virtual target pose in the target straight line direction under the preset target point coordinate system O_{o-xyz} according to a vector relationship *̅w̅o̅*̅ between the identifier and the origin of the preset target point coordinate system O_{o-xyz} under the identifier coordinate system O_{w-xyz}, a vector relationship between the identifier and a point P under the identifier coordinate system O_{w-xyz}, and a conversion relationship between the preset target point coordinate system O_{o-xyz} and the identifier coordinate system O_{w-xyz}, and record same as a coordinate axis Y axis of the virtual target point coordinate system, wherein the point P is obtained from a unit vector of the preset target point in the Z-axis direction of the identifier coordinate system; take a unit vector according to the direction perpendicular to the ground and record same as a coordinate axis Z axis of the virtual target point coordinate system; and obtain a coordinate axis X axis of the virtual target point coordinate system perpendicular to the target straight line, based on the principle of space rectangular coordinate system.

16. A storage medium, wherein the storage medium stores a computer instruction thereon, when executed, the computer instruction implementing a servo control method in any of claims 1-7.

17. A movable platform, comprising a collector configured to acquire an identifier, and also comprising the processor in any of claims 9-15, or the storage medium of claim 16.
